# EUROPEAN PATENT SPECIFICATION

(11) **EP 3 315 989 B1**
(45) Date of publication and mention of the grant of the patent: **20.09.2023**
(21) Application number: 16814800.5
(22) Date of filing: 12.05.2016
(51) Int. Cl.: G01S 3/80, G01S 1/72, G01V 1/18, G10K 9/22, G01S 1/74, G01S 5/18

(54) **HYDROACOUSTIC DEVICE**
HYDROAKUSTISCHE VORRICHTUNG
DISPOSITIF HYDRO-ACOUSTIQUE

(30) Priority: 26.06.2015 RU 2015125364 U
(43) Date of publication of application: 02.05.2018
(73) Proprietor: Underwater Communications & Navigation Laboratory Limited Liability Company, Moscow 143026 (RU)
(72) Inventor: DMITRIEV, Stanislav Mikhailovich, Volgograd 400055 (RU); DIKAREV, Alexander Vasilievich, Volgograd 400120 (RU)
(74) Representative: Koudine, Andreï
(86) International application number: PCT/RU2016/050009
(87) International publication number: WO 2016/209119

(56) References cited:
- RU-C1- 2 078 484
- RU-C1- 2 392 767
- RU-C1- 2 393 643
- RU-C1- 2 426 142
- RU-C2- 2 166 840
- US-A- 3 359 537
- US-A- 3 713 086
- US-A- 4 866 683
- US-B1- 6 580 661

## Description

### Technical field of invention.

The invention relates to hydroacoustics and more specifically to hydroacoustic devices. Such devices comprise, disposed in a single housing, a converter of liquid-medium oscillations and electrical signals, capable of receiving and/or transmitting hydroacoustic signals, the converter being disposed on a board which is connected to a switch cable for providing power and transmitting electrical signals, and may be used as a receiver and/or transmitter of hydroacoustic signals in a liquid medium for purposes of location sensing of the device by means of acoustic signals, manufacture of hydroacoustic receiving, transmitting and receiving/transmitting devices.

### Prior art.

A known example of prior art is a hydroacoustic device comprising, disposed in a single housing, a converter of liquid-medium oscillations and electrical signals, capable of receiving and/or transmitting hydroacoustic signals, the converter being disposed on a board which is connected to a switch cable for providing power and transmitting electrical signals, see description to the Russian invention patent No 2426142, published in 2011.

The above device is the closest to the essence of the claimed invention and is assumed herein as a prototype of the claimed invention. It relates to the transponder beacon of hydroacoustic navigation system.

The drawback of the above device is its structural complexity related to the fact that all its elements are disposed in a single housing, said housing being a separate element. The housing consumes a certain amount of materials, besides, effort should be made to make said housing leakproof, as the device is designed for use in a liquid medium.

Another known example of prior art is a hydroacoustic device according to US4866683A. The drawback of the above device is its structural complexity related to the fact that all its elements are disposed in two different housings, each of said housings is formed from one converter and corresponding side of the board. These two housings consumes a certain amount of materials, besides, effort should be made to make said housing leakproof, as the device is designed for use in a liquid medium.

Another known example of prior art is a hydroacoustic device according to US6580661B1. The drawback of the above device is its structural complexity related to the fact that all its elements are disposed in a single housing, said housing being a separate element. The housing consumes a certain amount of materials, besides, effort should be made to make said housing leakproof, as the device is designed for use in a liquid medium.

Another known example of prior art is a hydroacoustic device according to US3713086A. The drawback of the above device is its structural complexity related to the fact that all its elements are disposed in a single housing, said housing being a separate element. The housing consumes a certain amount of materials, besides, effort should be made to make said housing leakproof, as the device is designed for use in a liquid medium.

Another known example of prior art is a hydroacoustic device according to RU2166840C2. The drawback of the above device is its structural complexity related to the fact that all its elements are disposed in a single housing, said housing being a separate element. The housing consumes a certain amount of materials, besides, effort should be made to make said housing leakproof, as the device is designed for use in a liquid medium.

### Disclosure of the invention.

The present invention relies on this novel observation with the primary aim to offer a hydroacoustic device as defined in claim 1, that serves at least to mitigate one of the aforementioned drawbacks, namely, to simplify the design of the device, which is the technical objective.

For the purpose of reaching the above objective, the housing of the hydroacoustic device is formed by the outer surfaces of the converter and boards, and by a waterproof compound which coats all of said surfaces, said compound allowing for a transmission of the hydroacoustic oscillations.

This useful feature makes it possible to simplify the design of the device by eliminating the housing as a separate component and using the surface of the elements of the hydroacoustic device as said housing. To make the device leakproof when immersed in a liquid medium, said surfaces are fully coated in a protective material, namely, a special material like waterproof compound allowing for the transmission of the hydroacoustic oscillations. A number of materials can be selected for this purpose, for example, the materials that change their properties under the changing temperatures. For instance, they may be in a viscous flow state under high temperatures and harden when cooled.

A version of the invention includes thermoplastic is used as such protective material. This useful feature makes it possible to manufacture the protective coating for the hydroacoustic device from the thermoplastic. It is commonly known that the thermoplastic is a polymeric material which is capable to transit reversibly into a viscous flow state when heated. It is in a solid state under normal temperature.

A version of the invention includes thermoactive polymer resin that hardens under normal conditions to be used as such protective material. This useful feature makes it possible to manufacture the protective coating for the hydroacoustic device from the polymer resin. An example of such resin would be a compound which is in itself a thermoactive thermoplastic polymer resin (that hardens under normal conditions) and elastomer material with or without fillers and/or additives after hardening.

A version of the invention includes a synthetic elastomer used as such protective material. This useful feature makes it possible to manufacture the protective coating for the hydroacoustic device from the synthetic elastomer.

A priority version of the invention includes polyurethane used as such synthetic elastomer. This useful feature makes it possible to manufacture the protective coating for the hydroacoustic device from polyurethane, a synthetic material widely used in many industries as a substitute of rubber, caoutchouc, metal and plastic.

### Brief description of drawings.

Other distinguishing features and advantages of the invention are readily apparent from the description below which includes but is not limited to the following features, with reference to the figures attached:
- Figure 1 represents schematically an external side view of a hydroacoustic device, in its hemispheric realization, according to an example not forming part of the present invention,
- Figure 2 represents schematically an A-A vertical section of the hydroacoustic device, in its hemispheric realization, according to an example not forming part of the present invention,
- Figure 3 represents schematically an external side view of a hydroacoustic device, in its cylindrical realization, according to the invention,
- Figure 4 represents schematically an A-A vertical section of the hydroacoustic device, in its cylindrical realization, according to the invention,
- Figure 5 represents schematically a B-B horizontal section of the hydroacoustic device, in its cylindrical realization, according to the invention,
- Figure 6 represents operating stages of the hydroacoustic device according to the invention.

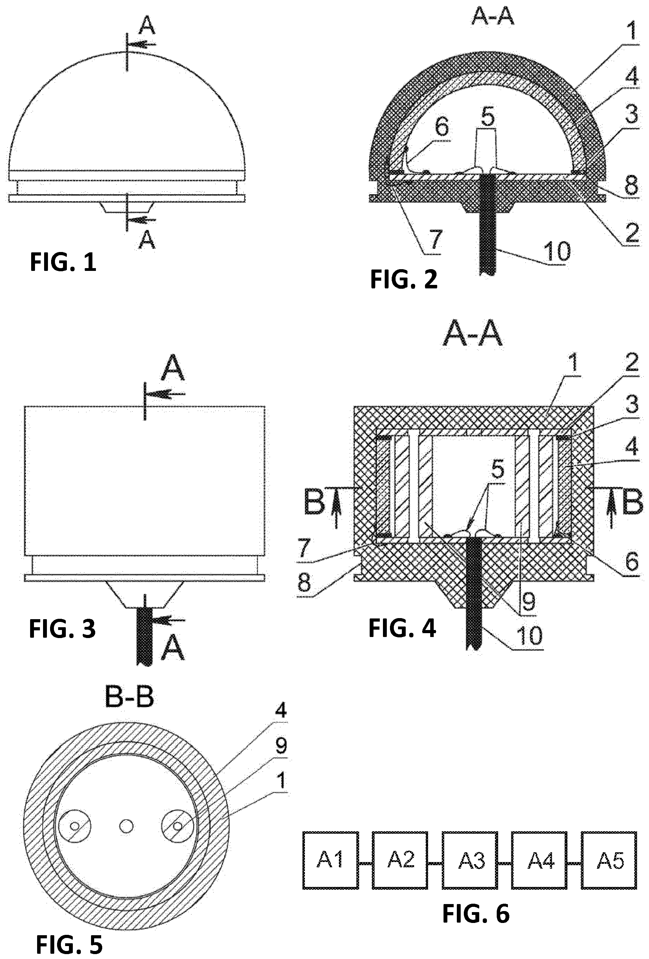

Figures 1-5 show:
1 - protective material,
2 - printed board with elements and/or receive/transmission path,
3 - rubber seal,
4 - converter,
5 - assignment for a switch cable for providing power and transmitting electrical signals,
6 - interlayer metallization sealing,
7 - external metallization sealing,
8 - mounting slot,
9 - support rod,
10- switch cable for providing power and transmitting electrical signals.

According to Figures 1-5, the hydroacoustic device comprises, disposed in a single housing, a converter 4 of liquid-medium oscillations and electrical signals, capable of receiving and/or transmitting hydroacoustic signals, the converter being disposed on a board or on boards 2, one of which is connected to a switch cable 10 for providing power and transmitting electrical signals. The housing of the hydroacoustic device is formed by the outer surfaces of the converter 4 and board or boards 2, and by a protective material 1 which coats all of said surfaces, said material allowing for a transmission of the hydroacoustic oscillations and being a waterproof compound.

The converter 4 may be piezoceramic, magnetostriction and other converters of the liquid-medium oscillations and the electrical signals capable of receiving and/or transmitting hydroacoustic signals. In the present invention, the shape of the converter 4 is cylindrical. In other examples, not forming part of the present invention the shape of a converter may be different: circular or hemispheric. Figures 1 and 2 represent examples of the converter 4 having an hemispherical form, according to an example, while Figures 3, 4 and 5 represent examples of the converter 4 having a cylindrical form, according to the present invention.

The board is a printed or a wire circuit board containing a receive, transmission or combined receive/transmission signal path capable (in any configuration) of comprising the following:
- power amplifier,
- input pre-amplifier,
- input and output band pass filters,
- analog-to-digital converter,
- digital-to-analog converter,
- digital signal processor, etc.

At the same time, the design may include additional mounting elements. In the case of the cylindrical converter element of the present invention a support rod 9 is positioned inside the cylindrical transmitter and additionally supports the load from end surfaces of the cylinder.

The hydroacoustic device is leakproof by coating it with a waterproof compound material, a thermoplastic, a vulcanization in a rubber housing or by any other method that ensures that the device is sufficiently insulated against the operating medium while retaining its acoustic transparency.

### Embodiment of the invention.

The hydroacoustic device is manufactured as follows. (A non-limiting example of embodiment is provided). According to the Figure 6:
**Stage A1.** The housing of the hydroacoustic device is formed from the elements such as the converter 4 and the printed board or boards 2, onto which the converter 4 is mounted.
**Stage A2.** The required electrical elements are placed onto the board.
**Stage A3.** The hydroacoustic device is connected to the switch cable 10.
**Stage A4.** An external surface of the hydroacoustic device is covered with the pre-heated protective material 1 to ensure that it is insulated against the liquid medium.
**Stage A5.** The protective material 1 is cooled and hardened.

Now the hydroacoustic device can be used in the liquid medium. A load resulting from an external pressure of the liquid medium is carried by the converter and also by other supporting elements. It is converted to electric signals, processed, if required, and transmitted via the switch cable 10.

The above optional embodiments of the invention are given herein by way of example and allow for new options or modifications for any eligible application. Some of the phases can be omitted or switched.

### Industrial applicability.

The claimed hydroacoustic device may be implemented by a person skilled in the art in practice and ensures that the claimed objectives are met after implementation. The opportunity for practical embodiment of the invention by a person skilled in the art results from the fact that for each attribute included in the claim as based on the description and drawings, an equivalent material embodiment is known, which leads to the conclusion that the invention meets the requirement of "industrial applicability" and "complete disclosure".

An industrial prototype of the hydroacoustic device in a hemispheric form (see Figures 1 and 2) as well as in a cylindrical form (see Figures 3, 4 and 5) has been manufactured, according to the invention, by the applicant "Underwater Communications and Navigation Laboratory" Limited Liability Company. Polyurethane was used as protective material.

Trial runs of the hydroacoustic device demonstrated that it was capable of:
- reception of hydroacoustic signals,
- transmission of hydroacoustic signals,
- operation at the depth of 150 m.

The housing is acoustically transparent and leakproof for the liquid media.

This invention makes it possible to simplify the design of receivers, transmitters and receiver/transmitters by combining the converter and signal forming and/or processing equipment and by using them as structural support elements. At the same time, all relevant signal conversions take place inside the item, thus lowering requirements for noise immunity and length of the switch cables. An additional economic benefit can be achieved by eliminating housings (metal, plastic or composite, etc.) from the design of the device, simplifying the device manufacturing process and simplifying switching and connecting hardware design for additional cost cuts.

Thus, the technical result achieved by means of the above effects consists in simplifying the design of the device.

## Claims

1. A hydroacoustic device adapted to be used in a liquid medium, the hydroacoustic device comprising:
• a converter (4) of liquid-medium oscillations and electrical signals, the converter (4) being capable of receiving and/or transmitting hydroacoustic signals, the converter (4) having a cylindrical form,
• a first disk-shaped printed or wire board comprising a receive/transmission signal path connected to a switch cable (10) for providing power and transmitting electrical signals, the diameter of the first disk-shaped printed or wire board being equal to the diameter of the cylindrical converter (4),
• a second disk-shaped printed or wire board (2), the diameter of the second disk-shaped printed or wire board (2) being equal to the diameter of the cylindrical converter (4),
• a protective material (1) allowing for a transmission of the hydroacoustic oscillations and being a waterproof compound,
one base of the cylindrical converter (4) being disposed on the first printed or wire board, and the other base of the cylindrical converter (4) being disposed on the second printed or wire board (2),
each of the first and second printed or wire circuit board (2) comprising a first outer surface oriented away from the cylindrical converter (4) and a second inner surface oriented toward the cylindrical converter (4),
the cylindrical converter (4) comprising a first inner surface, and a second outer surface,
a single housing of the hydroacoustic device being formed by:
• the first outer surface of the first printed or wire circuit board,
• the first outer surface of the second printed or wire circuit board (2),
• the second outer surface of the cylindrical converter (4), and
• the protective material (1) which is configured to coat said first outer surface of the first printed or wire circuit board, first outer surface of the second printed or wire circuit board (2), and second outer surface of the cylindrical converter (4),
the cylindrical converter (4), the first printed or wire circuit bord and the second printed or wire circuit board (2) being adapted to be used as a structural support element of the single housing,
the hydroacoustic device being **characterized in that** the hydroacoustic device comprises a support rod (9) positioned inside the inner surface of the cylindrical converter (4) and extending from the second inner surface of the first printed or wire circuit board to the second inner surface of the second printed or wire circuit board (2), and
**in that** the support rod (9) is configured to additionally support a load resulting from an external pression of the liquid medium to the end surfaces of the single housing.

2. The hydroacoustic device according to claim 1, **characterised in that** the board (2) comprises at least one of following apparatus: (a) input and output band pass filters; (b) analog-to-digital converter; (c) digital-to-analog converter; (d) digital signal processor.

3. The hydroacoustic device according to claim 1 or 2, **characterised in that** the single housing comprises a mounting slot (8) formed into the protective material (1).

## Patentansprüche

1. Hydroakustische Vorrichtung, angepasst an die Verwendung in einem flüssigen Medium, wobei die hydroakustische Vorrichtung umfasst:
- einen Wandler (4) für Schwingungen des flüssigen Mediums und elektrische Signale, wobei der Wandler (4) in der Lage ist, hydroakustische Signale zu empfangen und/oder zu senden, wobei der Wandler (4) eine zylindrische Form aufweist,
- eine erste scheibenförmige gedruckte oder verdrahtete Leiterplatte, die einen Empfangs-/Sendesignalpfad umfasst, der mit einem Schaltkabel (10) für die Stromversorgung und die Übertragung elektrischer Signale verbunden ist, wobei der Durchmesser der ersten scheibenförmigen Leiterplatte oder Platine gleich dem Durchmesser des zylindrischen Wandlers (4) ist,
- eine zweite scheibenförmige gedruckte oder verdrahtete Leiterplatte (2), wobei der Durchmesser der zweiten gedruckten oder verdrahteten Leiterplatte (2) gleich dem Durchmesser des zylindrischen Wandlers (4) ist,
- ein Schutzmaterial (1), das eine Übertragung der hydroakustischen Schwingungen ermöglicht und aus einer wasserdichten Verbindung besteht,
wobei eine Basis des zylindrischen Wandlers (4) auf der ersten gedruckten oder verdrahteten Leiterplatte angeordnet ist und die andere Basis des zylindrischen Wandlers (4) auf der zweiten gedruckten oder verdrahteten Leiterplatte (2) angeordnet ist,
wobei sowohl die erste als auch die zweite gedruckte oder verdrahtete Leiterplatte (2) eine erste, von dem zylindrischen Wandler (4) abgewandte Außenfläche und eine zweite, dem zylindrischen Wandler (4) zugewandte Innenfläche aufweist, wobei der zylindrische Wandler (4) eine erste Innenfläche und eine zweite Außenfläche aufweist,
wobei ein Einzelgehäuse der hydroakustischen Vorrichtung gebildet wird durch:
- die erste Außenfläche der ersten gedruckten oder verdrahteten Leiterplatte,
- die erste Außenfläche der zweiten gedruckten oder verdrahteten Leiterplatte (2),
- die zweite Außenfläche des zylindrischen Wandlers (4) und
- das Schutzmaterial (1), das so gestaltet ist, dass es die erste Außenfläche der ersten gedruckten oder verdrahteten Leiterplatte, die erste Außenfläche der zweiten gedruckten oder verdrahteten Leiterplatte (2) und die zweite Außenfläche des zylindrischen Wandlers (4) ummantelt,
wobei der zylindrische Wandler (4), die erste gedruckte oder verdrahtete Leiterplatte und die zweite gedruckte oder verdrahtete Leiterplatte (2) so beschaffen sind, dass sie als strukturelles Trägerelement des Einzelgehäuses verwendet werden können,
wobei die hydroakustische Vorrichtung **dadurch gekennzeichnet ist, dass** die hydroakustische Vorrichtung einen Stützstab (9) umfasst, der im Inneren der Innenfläche des zylindrischen Wandlers (4) angeordnet ist und sich von der zweiten Innenfläche der ersten gedruckten oder verdrahteten Leiterplatte zur zweiten Innenfläche der zweiten gedruckten oder verdrahteten Leiterplatte (2) erstreckt, und
dass der Stützstab (9) so konfiguriert ist, dass er zusätzlich eine Last trägt, die aus einem äußeren Druck des flüssigen Mediums auf die Endflächen des Einzelgehäuses resultiert.

2. Hydroakustische Vorrichtung nach Anspruch 1, **dadurch gekennzeichnet, dass** die Leiterplatte (2) mindestens eines der folgenden Geräte umfasst: (a) Eingangs- und Ausgangsbandpassfilter; (b) Analog-Digital-Wandler; (c) Digital-AnalogWandler; (d) digitaler Signalprozessor.

3. Hydroakustische Vorrichtung nach Anspruch 1 oder 2, **dadurch gekennzeichnet, dass** das Einzelgehäuse einen in das Schutzmaterial (1) eingeformten Montageschlitz (8) aufweist.

## Revendications

1. Un dispositif hydroacoustique adapté pour être utilisé dans un milieu liquide, le dispositif hydroacoustique comprenant :
• un convertisseur (4) d'oscillations du milieu liquide et des signaux électriques, le convertisseur (4) étant capable de recevoir et/ou de transmettre des signaux hydroacoustiques, le convertisseur (4) ayant une forme cylindrique,
• une première carte de circuit imprimé ou filaire en forme de disque comprenant une voie de signal de réception/transmission connectée à un câble de commutation (10) pour fournir de l'énergie et transmettre des signaux électriques, le diamètre de la première carte de circuit imprimé ou filaire en forme de disque étant égal au diamètre du convertisseur cylindrique (4),
• une seconde carte de circuit imprimé ou filaire en forme de disque (2), le diamètre de la seconde carte de circuit imprimé ou filaire en forme de disque (2) étant égal au diamètre du convertisseur cylindrique (4),
• un matériau de protection (1) assurant un passage des oscillations hydroacoustiques et constitué d'un composé imperméable,
une base du convertisseur cylindrique (4) étant disposée sur la première carte de circuit imprimé ou filaire, et l'autre base du convertisseur cylindrique (4) étant disposée sur la deuxième carte de circuit imprimé ou filaire (2),
la première et la seconde carte de circuit imprimé ou filaire (2) comprenant chacune une première surface extérieure orientée à l'opposé du convertisseur cylindrique (4) et une seconde surface intérieure orientée vers le convertisseur cylindrique (4),
le convertisseur cylindrique (4) comprenant une première surface intérieure et une seconde surface extérieure,
un boîtier unique du dispositif hydroacoustique étant formé par :
• la première surface extérieure de la première carte de circuit imprimé ou filaire,
• la première surface extérieure de la seconde carte de circuit imprimé ou de filaire (2),
• la deuxième surface extérieure du convertisseur cylindrique (4), et
• le matériau de protection (1) qui est configuré pour recouvrir lesdites première surface extérieure de la première carte de circuit imprimé ou filaire, première surface extérieure de la deuxième carte de circuit imprimé ou filaire (2), et deuxième surface extérieure du convertisseur cylindrique (4),
le convertisseur cylindrique (4), la première carte de circuit imprimé ou filaire et la deuxième carte de circuit imprimé ou filaire (2) étant adaptés pour être utilisés comme un élément de support structurel du boîtier unique,
le dispositif hydroacoustique étant **caractérisé en ce que** le dispositif hydroacoustique comprend une tige de support (9) positionnée à l'intérieur de la surface intérieure du convertisseur cylindrique (4) et s'étendant de la deuxième surface intérieure de la première carte de circuit imprimé ou filaire à la deuxième surface intérieure de la deuxième carte de circuit imprimé ou filaire (2), et
**en ce que** la tige de support (9) est configurée pour supporter en outre une charge résultant d'une pression externe du milieu liquide sur les surfaces d'extrémité du boîtier unique.

2. Le dispositif hydroacoustique selon la revendication 1, **caractérisé en ce que** la carte (2) comprend au moins l'un des appareils suivants : (a) filtres passe-bande d'entrée et de sortie ; (b) convertisseur analogique-numérique ; (c) convertisseur numérique-analogique ; (d) processeur de signaux numériques.

3. Le dispositif hydroacoustique selon la revendication 1 ou 2, **caractérisé en ce que** le boîtier unique comprend une fente de montage (8) formée dans le matériau de protection (1).
